# EUROPÄISCHE PATENTSCHRIFT

(11) **EP 1 214 722 B1**
(45) Veröffentlichungstag und Bekanntmachung des Hinweises auf die Patenterteilung: **21.05.2003**
(21) Anmeldenummer: 00960625.2
(22) Anmeldetag: 08.09.2000
(51) Int. Cl.: H01H 1/00, G01N 29/00

(54) **ANORDNUNG MIT EINEM SCHALTGERÄT UND EINER AUSWERTEEINRICHTUNG ZUR ERMITTLUNG DER RESTLEBENSDAUER**
SYSTEM COMPRISING A SWITCHING DEVICE AND AN EVALUATION DEVICE FOR DETERMINING THE REMAINING SERVICE LIFE
ENSEMBLE APPAREIL DE COMMUTATION ET DISPOSITIF D'EVALUATION DESTINE A LA DETECTION DE LA DUREE DE SERVICE RESTANTE

(30) Priorität: 20.09.1999 DE 19945059
(43) Veröffentlichungstag der Anmeldung: 19.06.2002
(73) Patentinhaber: Moeller GmbH, 53115 Bonn (DE)
(72) Erfinder: FENNER, Matthias, 65195 Wiesbaden (DE); BERGER, Frank, 53913 Swisttal-Miel (DE); FRÖHLICH, Klaus-Jochen, 01324 Dresden (DE); KÖHLER, Bernd, 01259 Dresden (DE)
(86) Internationale Anmeldenummer: EP0008769
(87) Internationale Veröffentlichungsnummer: WO01022452

(56) Entgegenhaltungen:
- EP-A- 0 333 139
- DE-A- 4 440 423
- DE-C- 19 523 270
- PATENT ABSTRACTS OF JAPAN vol. 007, no. 278 (P-242), 10. Dezember 1983 (1983-12-10) & JP 58 156851 A (TOKYO SHIBAURA DENKI KK), 17. September 1983 (1983-09-17)
- PATENT ABSTRACTS OF JAPAN vol. 006, no. 255 (P-162), 14. Dezember 1982 (1982-12-14) & JP 57 151829 A (TOKYO SHIBAURA DENKI KK), 20. September 1982 (1982-09-20)

## Beschreibung

Die Erfindung betrifft eine Anordnung mit einem Schaltgerät, insbesondere Niederspannungsschaltgerät wie Schütz, Leistungs-, Leitungs- oder Motorschutzschalter oder dergleichen, nach dem Oberbegriff des Anspruchs 1.

Aus der Druckschrift DE 37 14 802 A1 ist ein elektrischer Schalter bekannt, bei dem die Überwachung des Kontaktabbrandes mittels einer Lichtleiteranordnung erfolgt. Hierbei wird ein Lichtleiter zwischen der Stirnfläche des zu überwachenden Kontaktstückes und dem diesem zugeordneten Kontaktträger annähernd parallel zur Stimfläche des Kontaktstückes angeordnet. Hierdurch führt ein unzulässig hoher Kontaktstückabbrand zur Zerstörung des Lichtleiters und damit zur Änderung seiner optischen Eigenschaften. Diese Änderungen werden dann ausgewertet, so daß in einem Stadium, in dem noch eine begrenzte Lebensdauer der Kontakte erwartet werden kann, das Vorhandensein eines gewissen Kontaktabbrandes festgestellt werden kann. Hierbei kann allerdings erst mit der Zerstörung des Lichtleiters und damit erst nach einem gewissen Verschleiß des Schaltstückes überhaupt eine Abnutzung festgestellt werden. Weiterhin wird das zu untersuchende Kontaktstück durch die Einbettung eines Lichtleiters vorgeschädigt, so daß das Kontaktstück wenn es bis auf die Höhe des Lichtleiters abgebrannt ist, durch die Materialausnehmung eine plötzlich auftretende Verschleißerhöhung erfährt.

Der Erfindung liegt nun die Aufgabe zugrunde, eine Anordnung zu schaffen, die ohne Vorschädigung der Kontaktstücke und zu jedem beliebigen Verschleißzeitpunkt des Kontaktstückes, bei einer nahezu verschleißfreien Zustandserfassung eine Möglichkeit zur Beurteilung des Kontaktstückverschleißes gewährleistet.

Ausgehend von einer Anordnung der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Mit jedem Verschleißzustand eines Kontaktstückes sind bestimmte Eigenschaften desselben verbunden. So verändert das Kontaktstück mit zunehmendem Abbrand seine Eigenschaften in Bezug auf die Durchlässigkeits- beziehungsweise Reflektionseigenschaften von Schallwellen, die das Kontaktstück durchlaufen. Diese Änderungen werden gemäß der Erfindung durch akustische Hilfsmittel erfaßt und in einer Auswerteeinrichtung ausgewertet und so ein entsprechender Verschleißzustand ermittelt. Erfindungsgemäß finden akustische Hilfsmittel Verwendung, die einerseits Schallwellen in einem gewünschten Maß erzeugen können, so daß eine definierte Einprägung von Schallwellen in das zu untersuchende Kontaktstück einprägbar ist und die andererseits im Kontaktstück auftretende Schallwellen erfassen können.

Mit Vorteil findet zur Erzeugung und Erfassung der Schallwellen ein einziges akustisches Hilfsmittel in Form eines Piezoelementes Verwendung. Diese Hochleistungspiezos können insbesondere in Form von Dünnschichtelementen auf dem Kontaktstückträger, vorzugsweise unmittelbar gegenüberliegend dem zu untersuchenden Kontaktstück, auf der anderen Seite des selben Kontaktstückträgers, angeordnet sein.

Weitere Einzelheiten und Vorteile der Erfindung ergeben sich aus dem folgenden, anhand von Figuren erläuterten Ausführungsbeispiel. Es zeigen
- Figur 1:: ein erfindungsgemäßes Schaltgerät in Form eines Schützes;
- Figur 2:: die schematische Darstellung von Magnetantrieb und Kontaktsystem eines Schaltgerätes gemäß Fig. 1;
- Figur 3a:: eine Seitenansicht eines Schaltkontaktes mit Piezoelement, und
- Figur 3b:: der Schaltkontakt mit Piezoelement gemäß Fig. 3a aus Sicht in Pfeilrichtung.

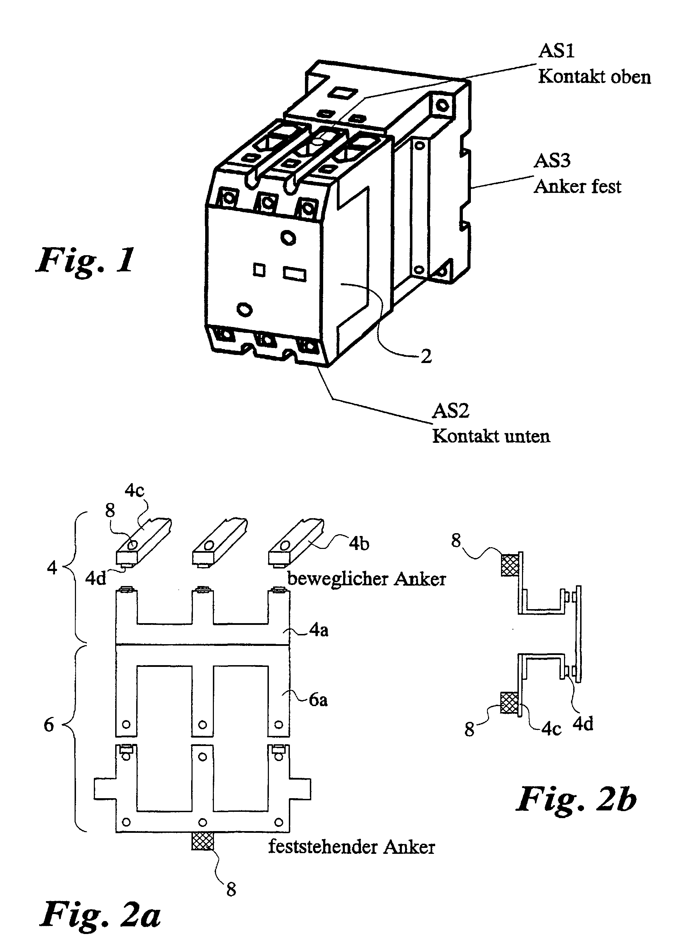

Fig. 1 zeigt ein erfindungsgemäßes Schaltgerät in Form eines Schützes. Ein derartiges Schütz umfaßt ein mehrteiliges Gehäuse 2 in dem ein Kontaktsystem (hier dreipolig), ein auf dieses Kontaktsystem 4 wirkender Magnetantrieb 6 sowie elektronische und/oder mechanische Auslöseelemente angeordnet sind.

Mit AS1, AS2 und AS3 sind Positionen angedeutet, an denen in dem Schaltgerät akustische Mittel 8 zur Schallerzeugung und Schallerfassung positioniert werden können. Bevorzugte Positionen zur Anbringung der akustischen Mittel sind die Anordnung am Kontaktstückträger 4c, insbesondere auf der diametral dem Kontaktstück 4d gegenüberliegenden Seite, oder aber an den Anschlußklemmen des Schaltgerätes. Hierdurch können Schallwellen direkt in das Kontaktstück 4d selbst eingeprägt und die reflektierten Körperschallwellen erfaßt und in einer Auswerteeinrichtung ausgewertet werden.

In der Figur 2 ist ein Kontaktsystem 4 mit zugehörigem Magnetantrieb 6 schematisch dargestellt. Dabei besteht das Kontaktsystem im wesentlichen aus einem beweglichen Schaltkontakt 4a, hier in Form einer dreipolig ausgebildeten Kontaktbrücke, die über den beweglichen Anker 6a des Magnetantriebes 6 angetrieben ist und feststehenden Schaltkontakten 4b.

Das erfindungsgemäße Schaltgerät weist ferner eine Auswerteeinheit, insbesondere Mikroprozessor, zur Bestimmung der Restlebensdauer der Schaltkontakte auf. Hierfür sind in dem Mikroprozessor zum Beispiel Referenzwerte verschiedener Verschleißzustände hinterlegt, die dann mit den ermittelten lstwerten des jeweils untersuchten Kontaktstückes verglichen und in Abhängigkeit hiervon ein bestimmter Verschleißgrad ermittelt und zugeordnet wird. Eine andere Möglichkeit ist die Ermittlung des Verschleißgrades durch ein in dem Prozessor hinterlegtes Programm, wobei nach einem bestimmten Algorithmus ein Verschleißwert ermittelbar ist. Der Ermittelte Verschleißgrad ist anschließend über eine Schnittstelle abfragbar (z.B. mit PC oder Diagnosegerät oder dergleichen) oder aber durch integrierte Anzeigemittel jederzeit anzeigbar.

Desweiteren ist ein derartiges Schaltgerät mit akustischen Mitteln 8 zur Erzeugung und Erfassung von Körperschallsignalen ausgebildet. Diese Mittel 8 sind mit Vorteil durch Piezoelemente gebildet. Dabei handelt es sich um Piezoelemente die über einen weiten Hochfrequenzbereich, vorzugsweise 20 kHz bis 225 kHz oder gar 500 kHz, präzise Signale liefern.

Mit Vorteil sind in einem einzigen Piezoelement sowohl Körperschallerzeugungsmittel als auch Körperschallerfassungsmittel vereint. Ein derartig ausgebildetes akustisches Mittel 8 wird vorzugsweise unmittelbar gegenüberliegend auf dem Kontaktstückträger 4c angeordnet. Durch die definierte Erzeugung von Körperschallwellen werden Körperschallwellen in das Kontaktstück 4d eingeprägt. In Abhängigkeit vom Verschleißzustand des Kontaktstückes werden die Schallwellen unterschiedlich stark reflektiert und aufgrund der erfaßten reflektierten Körperschallwellen ein bestimmter Verschleißgrad ermittelt. Dies geschieht bevorzugt im stromlosen Zustand des Schaltgerätes, insbesondere bei geöffneten Schaltkontakten. So werden mögliche Störquellen von vornherein eliminiert.

Eine getrennte Ausgestaltung von Erzeugungs- und Erfassungsmittel ist ebenfalls möglich. So ist denkbar die Erzeugungs- und Erfassungsmittel ebenfalls auf der einem zugeordneten Kontaktstück 4d gegenüberliegenden Seite des Kontaktstückträgers 4c anzuordnen.
In einer weiteren Ausführung ist vorstellbar, zusammenwirkende Erzeugungsund Erfassungsmittel einem Kontaktpaar zuzuordnen und auf den Außenseiten der jeweiligen Kontakstückträger 4c anzuordnen. Bei dieser Anordnung könnte eine Ermittlung des Kontaktstückverschleißes nur bei geschlossenen Kontakten erfolgen, wobei auf der einen Seite des Kontaktpaares in einem definierten Maß Körperschallwellen eingeprägt und auf der anderen Seite des Kontaktpaares Körperschallwellen erfaßt werden. Dabei stellt die Intensität der erfaßten Körperschallwellen ein Maß für den Verschleiß des Kontaktpaares dar.

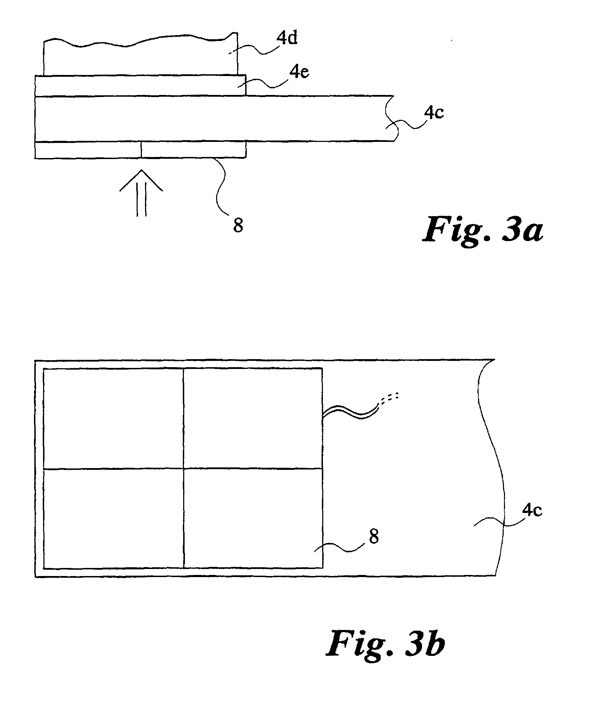

Wie in Fig. 3a dargestellt, kann solch ein akustisches Mittel 8 unmittelbar am Kontaktträger 4c des zugehörigen Kontaktstückes 4d angeordnet sein. In einer besonders bevorzugten Ausführung der Erfindung ist das jeweils einem Schaltkontakt zugeordnete Mittel 8 derart montiert, daß eine galvanische Trennung gewährleistet wird. Vorzugsweise wird hierfür zwischen dem Kontaktstückträger 4c und dem akustischen Mittel 8 ein Keramikträger 4e montiert. Hierdurch wird ohne negativen Einfluß auf die Schallerfassung eine sichere galvanische Trennung realisiert.

In einer besonders vorteilhaften Ausführungsform sind einem Kontaktstück 4d mindestens zwei Mittel 8 zugeordnet. Hierdurch wird die partielle, ortsaufgelöste Untersuchung eines Kontaktstückes 4d ermöglicht. Dies ist von Vorteil, da Kontaktstücke 4d in der Regel nur sehr ungleichmäßigem Verschleiß (Abbrand) unterliegen und somit eine qualitativ bessere Zustandsermittlung einzelner Teilbereiche des Kontaktstückes 4d ermöglicht wird. Für diese Ausführungsform ist von Vorteil, die einzelnen Mittel 8 auf der dem Kontaktstück 4d gegenüberliegenden Seite auf dem Kontaktstückträger 4c selbst, unterhalb des zugehörigen Kontaktstückes 4d, anzuordnen.
Mit Vorteil werden einem Kontaktstück 4d vier Mittel 8 zugeordnet. Dabei sind diese insbesondere derart angeordnet, daß jedes Mittel 8 eines von vier Koordinatenfeldern, eines auf das Kontaktstück 4d abgebildeten kartesischen Koordinatensystems, erfaßt.

In einer anderen Ausführungsform können die verschiedenen, einem einzigen Kontaktstück 4d zugeordneten Erfassungsmittel (hier Piezos), ringförmig verschachtelt angeordnet sein. So können kreis und/oder kreisringförmige Teilbereiche eines Kontaktstückes 4d differenziert ausgewertet werden. Verschiedenste andere geometrische Ausführungsformen sind je nach Anwendungsfall ebenfalls denkbar.
Zur Optimierung der Auswertung der erfaßten Körperschallwellen können die einzelnen Mittel 8, beziehungsweise die einzelnen Teilbereiche eines Mittels 8, unterschiedlich gewichtet werden. Hierfür sind in einer möglichen Ausführung unterschiedlich empfindliche Mittel 8 vorgesehen, während in einer anderen Ausführung identische oder unterschiedliche Mittel 8 vorgesehen sind und die erfaßten Signale der einzelnen Mittel 8 bei der Auswertung unterschiedlich gewichtet werden.

## Patentansprüche

1. Anordnung mit
- einem Schaltgerät, insbesondere Niederspannungsschaltgerät, umfassend ein Gehäuse, ein darin angeordnetes Kontaktsystem (4) mit einem Kontaktstückträger (4c) und einem darauf angeordneten Kontaktstück (4d), Mittel (8) zur Erfassung eines Ersatzkriteriums für die Bestimmung der Restlebensdauer eines Kontaktstückes (4d), und
- einer Auswerteeinrichtung zur Auswertung des Ersatzkriteriums, **dadurch gekennzeichnet, daß** die Mittel (8) zur Erzeugung und Erfassung von Körperschallwellen ausgebildet sind.

2. Anordnung nach Anspruch 1, **dadurch gekennzeichnet, daß** die Mittel (8) durch ein Piezoelement, insbesondere ein Hochfrequenzpiezo für einen Frequenzbereich von 20 kHz bis 225 kHz, gebildet sind.

3. Anordnung nach Anspruch 2, **dadurch gekennzeichnet, daß** Mittel (8) in einem gemeinsamen Piezoelement gebildet sind.

4. Anordnung nach einem oder mehreren der Ansprüche 1-3, **dadurch gekennzeichnet, daß** die Mittel (8) auf dem Kontaktstückträger (4c), unmittelbar gegenüberliegend des Kontaktstückes (4d), angeordnet sind.

5. Anordnung nach einem oder mehreren der Ansprüche 1-4, **dadurch gekennzeichnet, daß** einem Kontaktstück (4d) mindestens je zwei Mittel (8) zugeordnet sind, die ihrerseits wiederum unterschiedlichen Teilbereichen des Kontaktstückes (4d) zugeordnet sind.

6. Anordnung nach einem oder mehreren der Ansprüche 1-4, **dadurch gekennzeichnet, daß** einem Kontaktstück (4d) genau je vier Mittel (8) zugeordnet sind.

7. Anordnung nach Anspruch 6, **dadurch gekennzeichnet, daß** die Mittel (8) in Viertelsegmenten ausgebildet sind und über die gesamte geometrische Ausbreitung des Kontakstückes (4d) in vier einzelnen Koordinatenflächen die Ersatzkriterien für den Verschleiß des Kontaktstückes (4d) abbilden.

8. Anordnung nach einem oder mehreren der Ansprüche 1-6, **dadurch gekennzeichnet, daß** die Mittel (8) kreisringförmig oder kreis- und kreisringförmig ausgebildet sind und über die gesamte geometrische Ausbreitung des Kontakstückes (4d) den Verschleiß des Kontaktstückes (4d) abbilden.

9. Anordnung nach einem oder mehreren der Ansprüche 5-8, **dadurch gekennzeichnet, daß** einzelnen Mitteln (8) eine unterschiedliche Gewichtung zur Auswertung zukommt.

10. Anordnung nach einem oder mehreren der Ansprüche 1-9, **dadurch gekennzeichnet, daß** die Mittel (8) derart an dem Kontaktstückträger (4c) angeordnet sind, das eine galvanische Trennung gewährleistet ist.

11. Anordnung nach Anspruch 10, **dadurch gekennzeichnet, daß** die Mittel (8) auf einem Keramikträger (4e) angeordnet sind.

12. Anordnung nach einem oder mehreren der Ansprüche 1-11, **dadurch gekennzeichnet, daß** die Auswerteeinrichtung in das Schaltgerät integriert ist.

13. Anordnung nach einem oder mehreren der Ansprüche 1-12, **dadurch gekennzeichnet, daß** die Auswerteeinrichtung als separates mit dem Schaltgerät koppelbares Gerät ausgebildet ist.

## Claims

1. System comprising
- a switching device, particularly a low-voltage switching device, including a housing, a contact system (4) arranged therein having a contact piece carrier (4c) and a contact piece (4d) arranged thereon, means (8) for detecting an equivalent criterion for determining the remaining service life of a contact piece (4d), and
- an evaluation device for evaluating the equivalent criterion,
**characterized in that** the means (8) are adapted to generate and detect structure-borne sound waves.

2. System according to Claim 1, **characterized in that** the means (8) are formed by a piezoelectric element, particularly a high-frequency piezo for a frequency range of 20 kHz to 225 kHz.

3. System according to Claim 2, **characterized in that** means (8) are formed in a common piezoelectric element.

4. System according to one or more of Claims 1 to 3, **characterized in that** the means (8) are arranged on the contact piece carrier (4c), directly opposite the contact piece (4d).

5. System according to one or more of Claims 1 to 4, **characterized in that** at least two means (8) are assigned to one contact piece (4d) the said means being in turn associated with different partial areas of the contact piece (4d).

6. System according to one or more of Claims 1 to 4, **characterized in that** exactly four means (8) respectively are associated with one contact piece (4d).

7. System according to Claim 6, **characterized in that** the means (8) are formed in quarter segments and image the equivalent criteria for the wear of the contact piece (4d) over the entire geometric expansion of the contact piece (4d) in four individual coordinate fields.

8. System according to one or more of Claims 1 to 6, **characterized in that** the means (8) are annular, or circular and annular, and that they image the wear of the contact piece (4d) over the entire geometric expansion of the contact piece (4d).

9. System according to one or more of Claims 5 to 8, **characterized in that** different weighting in view of the evaluation is attributed to individual means (8).

10. System according to one or more of Claims 1 to 9, **characterized in that** the means (8) are provided on the contact piece carrier (4c) in such a way that galvanic isolation is ensured.

11. System according to Claim 10, **characterized in that** the means (8) are arranged on a ceramic support (4e).

12. System according to one or more of Claims 1 to 11, **characterized in that** the evaluation device is integrated into the switching device.

13. System according to one or more of Claims 1 to 12, **characterized in that** the evaluation device is constructed as a separate device capable of being coupled to the switching device.

## Revendications

1. Ensemble comprenant
- un appareil de commutation, en particulier un appareil de commutation électrique à basse tension, comprenant un coffret, un ensemble de contacts (4) placé dans celui-ci et doté d'un support de pièce de contact (4c) et d'une pièce de contact (4d) disposée sur ledit support de pièce de contact, des moyens (8) pour la saisie d'un critère équivalent en vue de la détermination de la durée de service restante d'une pièce de contact (4d) et,
- un dispositif d'évaluation destiné à l'évaluation du critère équivalent,
**caractérisé en ce que** les moyens (8) sont adaptés à la génération et la détection d'ondes sonores de structure.

2. Ensemble selon la revendication 1, **caractérisé en ce que** les moyens (8) sont constitués d'un élément piézoélectrique, en particulier un piézo haute fréquence pour une plage de fréquence de 20 kHz à 225 kHz.

3. Ensemble selon la revendication 2, **caractérisé en ce que** des moyens (8) sont formés dans un élément piézoélectrique commun.

4. Ensemble selon l'une ou plusieurs des revendications 1 à 3, **caractérisé en ce que** les moyens (8) sont disposés sur le support de pièce de contact (4c), immédiatement opposés à la pièce de contact (4d).

5. Ensemble selon l'une ou plusieurs des revendications 1 à 4, **caractérisé en ce qu'**au moins deux moyens (8) sont assignés à une pièce de contact (4d), lesdits moyens étant d'autre part associés avec des zones partielles différentes de la pièce de contact (4d).

6. Ensemble selon l'une ou plusieurs des revendications 1 à 4, **caractérisé en ce que** exactement quatre moyens (8) sont assignés à une pièce de contact (4d).

7. Ensemble selon la revendication 6, **caractérisé en ce que** les moyens (8) sont conformés en quarts de segments et qu'ils donnent une image des critères équivalents de l'usure de la pièce de contact (4d) sur toute l'extension géométrique de la pièce de contact (4d) dans quatre champs de coordonnées individuels.

8. Ensemble selon l'une ou plusieurs des revendications 1 à 6, **caractérisé en ce que** les moyens (8) sont conformés de manière annulaire ou circulaire et annulaire et qu'ils donnent une image de l'usure de la pièce de contact (4d) sur toute l'extension géométrique de la pièce de contact (4d).

9. Ensemble selon l'une ou plusieurs des revendications 5 à 8, **caractérisé en ce qu**'à des moyens (8) individuels est attribuée une pondération différente en vue de l'évaluation.

10. Ensemble selon l'une ou plusieurs des revendications 1 à 9, **caractérisé en ce que** les moyens (8) sont prévus sur le support de pièce de contact (4c) de telle manière qu'une séparation galvanique soit assurée.

11. Ensemble selon la revendication 10, **caractérisé en ce que** les moyens (8) sont disposés sur un support en céramique (4e).

12. Ensemble selon l'une ou plusieurs des revendications 1 à 11, **caractérisé en ce que** le dispositif d'évaluation est intégré dans l'appareil de commutation.

13. Ensemble selon l'une ou plusieurs des revendications 1 à 12, **caractérisé en ce que** le dispositif d'évaluation est construit comme appareil séparé, capable d'être couplé avec l'appareil de commutation.
